(19) Europäisches Patentamt
European Patent Office
Office européen des brevets

(11) Veröffentlichungsnummer: **0 114 624**
**A2**

(12) # EUROPÄISCHE PATENTANMELDUNG

(21) Anmeldenummer: **84100309.8**

(22) Anmeldetag: **13.01.84**

(51) Int. Cl.³: **C 09 B 67/22**
D 06 P 3/54

(30) Priorität: **22.01.83 DE 3302096**

(43) Veröffentlichungstag der Anmeldung:
**01.08.84 Patentblatt 84/31**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Becker, Ernst, Dr.**
**Fichtestrasse 18**
**D-6700 Ludwigshafen(DE)**

(72) Erfinder: **Bergmann, Udo, Dr.**
**Merckstrasse 26**
**D-6100 Darmstadt(DE)**

(72) Erfinder: **Degen, Helmut**
**Wildstrasse 32**
**D-6710 Frankenthal(DE)**

(72) Erfinder: **Hansen, Guenter, Dr.**
**Alwin-Mittasch-Platz 8**
**D-6700 Ludwigshafen(DE)**

(72) Erfinder: **Krallmann, Reinhold**
**Bachweg 2**
**D-6719 Weisenheim(DE)**

(54) **Marineblaue Farbstoffmischungen.**

(57) Die Erfindung betrifft marineblaue Farbstoffmischungen, die im wesentlichen Farbstoffe der Formel I

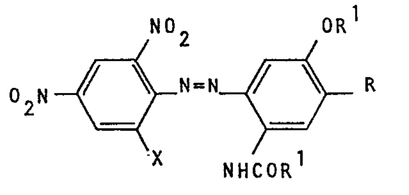

I

enthalten, in der

X Wasserstoff, Chlor oder Brom, die Reste
$R^1$ unabhängig voneinander Methyl oder Ethyl und
R ein Rest der Formel

$NH-A-COOB$, $N(C_2H_4CN)(CH_2CH=CH_2)$

oder

$N(C_2H_4OCR^2)_2$ (mit $\|$ O an C)

sind, wobei

A $-C_2H_4-$, $-CH(CH_3)-CH_2-$

oder

$-CH_2-CH(CH_3)-$

B gegebenenfalls substituiertes $C_1$- bis $C_4$-Alkyl, Phenyl-$C_1$- bis $C_4$-alkyl, Phenoxy-$C_2$- oder $C_3$-alkyl oder Cyclohexyl und

$R^2$ $C_1$- bis $C_4$-Alkyl bedeuten und wobei die Mischungen 20 bis 80 Teile von Farbstoffen mit R = NH−A−COOB und 80

bis 20 Teile von Farbstoffen mit

./...

EP 0 114 624 A2

R = 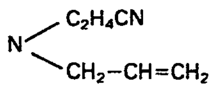

und/oder R = $N(C_2H_4O\underset{\underset{\displaystyle O}{\|}}{C}R^2)_2$ enthalten.

Die erfindungsgemäßen Mischungen eignen sich sehr gut zum Färben von synthetischen Polyestern, man erhält dabei Färbungen mit insbesondere sehr guten thermischen Echtheiten.

# Marineblaue Farbstoffmischungen

Die Erfindung betrifft marineblaue Farbstoffmischungen, die im wesentlichen Farbstoffe der Formel I

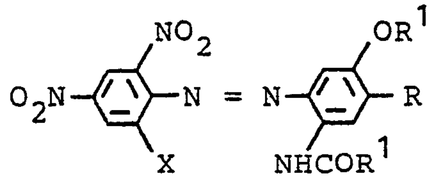

I

enthalten, in der

X Wasserstoff, Chlor oder Brom, die Reste

$R^1$ unabhängig voneinander Methyl oder Ethyl und

R ein Rest der Formel

NH-A-COOB, $N(C_2H_4CN)(CH_2CH{=}CH_2)$ oder $N(C_2H_4OC(=O)R^2)_2$ sind, wobei

A $-C_2H_4-$, $-CH(CH_3)-CH_2-$ oder $-CH_2-CH(CH_3)-$

B gegebenenfalls substituiertes $C_1$- bis $C_4$-Alkyl, Phenyl-$C_1$- bis $C_4$-alkyl, Phenoxy-$C_2$- oder $C_3$-alkyl oder Cyclohexyl und

$R^2$ $C_1$- bis $C_4$-Alkyl bedeuten und wobei die Mischungen 20 bis 80 Teile von Farbstoffen mit R = NH-A-COOB und 80 bis 20 Teile von Farbstoffen mit R = $N(C_2H_4CN)(CH_2-CH{=}CH_2)$ und/oder R = $N(C_2H_4OC(=O)R^2)_2$ enthalten.

Reste B sind im einzelnen beispielsweise:

$CH_3$, $C_2H_5$, n- oder i-$C_3H_7$, n- oder i-$C_4H_9$, $C_2H_4OH$, $C_2H_4OCH_3$, $C_2H_4OC_2H_5$, $C_2H_4OC_3H_7$, $C_2H_4OC_4H_9$, $C_2H_4CN$, $C_3H_6OH$, $C_3H_6OCH_3$, $C_3H_6OC_2H_5$, $C_3H_6OC_3H_7$, $C_3H_6OC_4H_9$,

$CH_2$— 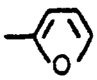 , $CH_2$— 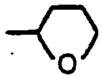 , $CH_2C_6H_5$, $CH_2C_6H_4CH_3$, $CH_2C_6H_4Cl$, $CH_2C_6H_4OCH_3$, $C_2H_4C_6H_5$, $C_2H_4C_6H_4CH_3$, $C_3H_6C_6H_5$, $C_4H_9C_6H_5$,

$CH_3$
|
$CH-C_6H_5$, $C_2H_4OC_6H_5$, $C_3H_6OC_6H_5$, $C_2H_4OC_6H_4CH_3$, $C_2H_4OC_6H_3(CH_3)_2$, oder $C_2H_4OC_6H_4Cl$, wobei die Reste $C_3H_6$ und $C_4H_8$ die n- und iso-Alkylengruppen umfassen.

A ist insbesondere $-C_2H_4-$. Bevorzugt für X ist Brom und für $R^1$ Methyl und Ethyl. $R^2$ ist vorzugsweise Methyl und B Benzyl, Phenylethyl oder Phenoxyethyl.

Bevorzugte Mischungen enthalten 40 bis 60 Teile an Farbstoffen mit $R = NHC_2H_4COOB$ und 60 bis 40 Teile von Farbstoffen

mit R = N $\begin{cases} C_2H_4CN \\ CH_2CH=CH_2 \end{cases}$ und/oder $R = N(C_2H_4OCR^2)_2$ (C=O).

Die Herstellung der Mischungen kann durch Mischen der Einzelkomponenten oder auch synthetisch, z. B. durch eine Mischkupplung, erfolgen. Die Farbstoffmischungen können bedingt durch die Synthese der Kupplungskomponenten noch geringe Anteile an anderen Farbstoffen, z. B. Verbindungen der Formel I mit

$R = NHC_2H_4CN$, $NHCH_2-CH=CH_2$ oder $N(CH_2CH=CH_2)_2$ enthalten.

Die erfindungsgemäßen Mischungen ergeben auf synthetischen Polyestern marineblaue Färbungen, die sich durch hervorragende thermische Echtheiten und gute Naß-, Nachfixier- und Lichtechtheiten auszeichnen. Sie sind weiterhin durch temperaturunabhängiges Aufziehverhalten, gutes Aufbauvermögen und Beständigkeit gegenüber reduzierend wirkenden Substanzen ausgezeichnet.

In den folgenden Beispielen beziehen sich Angaben über Teile und Prozente, sofern nicht anders vermerkt, auf das Gewicht.

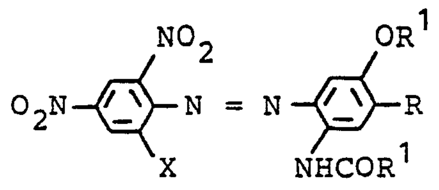

Beispiel 1

60 Teile des Farbstoffs mit X = Brom, $R^1$ = Methyl,

R = 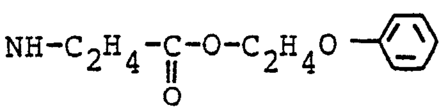 und

40 Teile des Farbstoffs mit X = Brom, $R^1$ = Methyl und

R = 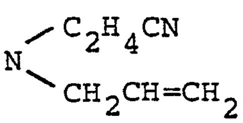

wurden in einer Kugelmühle intensiv vermischt und ergaben 100 Teile einer erfindungsgemäßen Farbstoffmischung.

Beispiel 2

40 Teile des Farbstoffs mit X = Brom, $R^1$ = Methyl,

R = 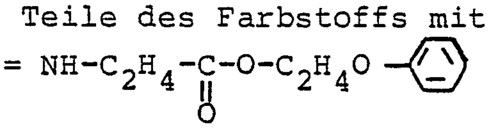 und

60 Teile des Farbstoffs mit X = Brom, $R^1$ = Methyl und

R = $N(C_2H_4O\underset{\underset{O}{\|}}{C}CH_3)_2$

wurden in einer Kugelmühle zu 100 Teilen einer erfindungsgemäßen Farbstoffmischung vereinigt.

## Beispiel 3

50 Teile des Farbstoffs mit X = Brom, $R^1$ = Methyl,
$R = NHC_2H_4\underset{\overset{\|}{O}}{C}-O-C_2H_4-O-$ 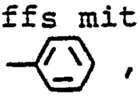 ,

25 Teile des Farbstoffs mit X = Brom, $R^1$ = Methyl,
$R = N\begin{cases} C_2H_4CN \\ CH_2CH=CH_2 \end{cases}$ und

25 Teile des Farbstoffs mit X = Brom, $R^1$ = Methyl,
und $R = N(C_2H_4O\underset{\overset{\|}{O}}{C}CH_3)_2$

wurden in einer Kugelmühle zu 100 Teilen einer erfindungsgemäßen Farbstoffmischung vermischt.

## Beispiel 4

26,2 Teile 2-Brom-4,6-dinitroanilin wurden in 100 Teilen 96 %iger Schwefelsäure gelöst, bei 5 - 10 °C mit 32 Teilen Nitrosylschwefelsäure (11,5 % $N_2O_3$) diazotiert und 16 Stunden bei 10 - 15 °C nachgerührt.

20,5 Teile 3-(N-ß-Benzyloxycarbonylethyl-amino)-4-methoxyacetanilid und 10,9 Teile 3-(N-Allyl-N-ß-cyanethyl-amino)-4-methoxyacetanilid wurden in 250 Teilen Dimethylformamid gelöst, in eine Mischung aus 60 Teilen 32 %iger Salzsäure und 300 Teilen Wasser eingerührt und mit 400 Teilen Eis versetzt. Anschließend ließ man bei 0 - 5 °C die Diazoniumsalzlösung zulaufen. Nach beendeter Kupplung wurde die Suspension auf 40 °C erhitzt, der Farbstoff abfiltriert, mit Wasser neutral gewaschen und getrocknet. Man erhielt 55 Teile einer erfindungsgemäßen Farbstoffmischung, enthaltend ungefähr 35 Teile des Farbstoffs mit X = Brom,

$R^1$ = Methyl, R = 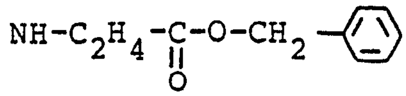 und ungefähr 20 Teile des Farbstoffs mit X = Brom, $R^1$ = Methyl und R = 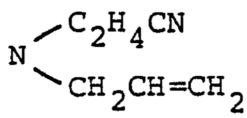.

Beispiel 5 (HT-Verfahren)

100 Teile eines Polyestergarns werden in einem Färbebad, das 1000 Teile Wasser, 2,5 Teile der gemäß Beispiel 1 hergestellten, feinverteilten Farbstoffmischung und 1,5 Teile eines durch Anlagerung von 50 Mol Ethylenoxid an 1 Mol Spermölalkohol und anschließendes Sulfonieren erhaltenen Produktes enthält, behandelt. Man beginnt die Färbung bei 60 °C, erhöht die Temperatur in 20 Minuten auf 125 °C und färbt noch weitere 90 Minuten bei dieser Temperatur.

Man erhält eine tiefe Marineblaufärbung, die sich durch eine hohe Thermofixierechtheit, durch eine gute Lichtechtheit und sehr gute Naßechtheitseigenschaften auszeichnet.

Beispiel 6 (Thermosolverfahren)

Ein Polyestergewebe wird auf einem Dreiwalzenfoulard mit einer Färbeflotte getränkt, die in 1000 Teilen 45 Teile der gemäß Beispiel 2 hergestellten, feinverteilten Farbstoffmischung, 15 Teile einer 20 %igen wäßrigen Lösung des Copolymeren aus Acrylsäure und Acrylamid und 940 Teile Wasser enthält.

Nach dem Imprägnieren unter 65 % Flottenaufnahme wird das Gewebe bei 120 °C zwischengetrocknet und während 1 Minute bei 220 °C thermosoliert. Man erhält eine tiefe Marineblaufärbung mit hervorragneden Echtheitseigenschaften.

Beispiel 7 (Textildruck)

Ein Polyestergewebe wird mit einer Paste bedruckt, die in 1000 Teilen 50 Teile der gemäß Beispiel 3 hergestellten, feinverteilten Farbstoffmischung, 20 Teile des Umsetzungsproduktes aus 1 Mol Rizinusöl und 40 Mol Ethylenoxid, 600 Teile einer Kristallgummiverdickung, 10 Teile Triisobutylphosphat und 320 Teile Wasser enthält.

Nach dem Trocknen dämpft man das bedruckte Gewebe während 15 Minuten bei 2,5 bar. Der erhaltene tiefe, marineblaue Druck weist ausgezeichnete Echtheitseigenschaften auf.

## Patentansprüche

1. Marineblaue Farbstoffmischungen, die im wesentlichen Farbstoffe der Formel I

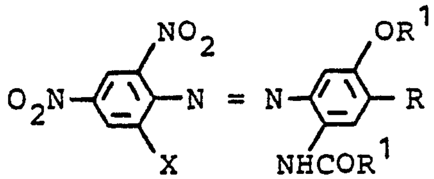

I

enthalten, in der

X Wasserstoff, Chlor oder Brom, die Reste

$R^1$ unabhängig voneinander Methyl oder Ethyl und

R ein Rest der Formel

NH-A-COOB, 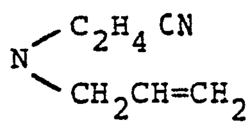 oder $N(C_2H_4OC(=O)R^2)_2$ sind, wobei

A $-C_2H_4-$, $-CH(CH_3)-CH_2-$ oder $-CH_2-CH(CH_3)-$

B gegebenenfalls substituiertes $C_1$- bis $C_4$-Alkyl, Phenyl-$C_1$- bis $C_4$-alkyl, Phenoxy-$C_2$- oder $C_3$-alkyl oder Cyclohexyl und

$R^2$ $C_1$- bis $C_4$-Alkyl bedeuten und wobei die Mischungen 20 bis 80 Teile von Farbstoffen mit R = NH-A-COOB und 80 bis 20 Teile von Farbstoffen mit R = 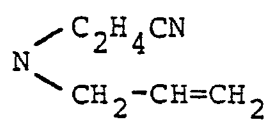 und/oder R = $N(C_2H_4OC(=O)R^2)_2$ enthalten.

2. Mischungen gemäß Anspruch 1, wobei X Brom, $R^2$ Methyl und B Benzyl, Phenylethyl oder Phenoxyethyl sind.

3. Mischungen gemäß Anspruch 1, enthaltend 40 bis 60 Teile an Farbstoffen mit R = $NHC_2H_4COOB$ und 60 bis 40 Teile von Farbstoffen mit

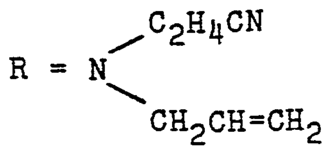

und/oder R = $N(C_2H_4OCOR^2)_2$.

4. Verwendung der Mischungen gemäß Anspruch 1 zum Färben von synthetischen Polyestern.